# FASCICULE DE BREVET EUROPEEN

(11) **EP 2 297 431 B1**
(45) Date de publication et mention de la délivrance du brevet: **15.06.2016**
(21) Numéro de dépôt: 09745775.8
(22) Date de dépôt: 14.05.2009
(51) Int. Cl.: F01D 25/24, F16B 2/24

(54) **ORGANE DE VERROUILLAGE DE SECTEURS D'ANNEAU SUR UN CARTER DE TURBOMACHINE, COMPRENANT DES PASSAGES RADIAUX PERMETTANT SA PREHENSION**
VERBINDUNGSELEMENT MIT DEMONTAGEVORRICHTUNG ZUR BEFESTIGUNG VON STATORELEMENTEN IN EINER TURBOMASCHINE
MEMBER FOR LOCKING RING SECTORS ON A TURBINE ENGINE CASING, INCLUDING RADIAL PASSAGES FOR GRIPPING SAME

(30) Priorité: 16.05.2008 FR 0853182
(43) Date de publication de la demande: 23.03.2011
(73) Titulaire: Snecma, 75015 Paris (FR)
(72) Inventeur: GENDRAUD, Alain, Dominique, F-77670 Vernou La Celle Sur Seine (FR)
(74) Mandataire: Ilgart, Jean-Christophe
(86) Numéro de dépôt international: PCT/EP2009/055811
(87) Numéro de publication internationale: WO 2009/138443

(56) Documents cités:
- EP-A- 0 967 364
- EP-A- 1 455 055
- FR-A- 2 887 920
- GB-A- 1 139 295

## Description

### DOMAINE TECHNIQUE

La présente invention se rapporte de façon générale à un organe de verrouillage pour dispositif de fixation de secteurs d'anneau sur un carter de turbomachine d'aéronef, par exemple un carter de turbine. Un tel organe est par exemple connu du document EP 0 967 364.

L'invention concerne également une turbomachine pour aéronef comprenant de tels organes de verrouillage, cette turbomachine pouvant prendre la forme d'un turbopropulseur ou d'un turboréacteur.

### ETAT DE LA TECHNIQUE ANTERIEURE

De l'art antérieur, il est connu des secteurs d'anneau fixés circonférentiellement sur le carter autour des aubes mobiles de la turbine d'un turboréacteur, ces secteurs formant conjointement une enveloppe cylindrique continue délimitant extérieurement la veine de passage des gaz dans la turbine. Les secteurs d'anneau sont montés sur un carter interne de la turbine au moyen d'éléments de carter, dénommés éléments intermédiaires de carter ou encore entretoises, sur lesquels ils sont accrochés à leur extrémité avant et maintenus à leur extrémité arrière par des organes de verrouillage en forme de C ou de U couché. Ces derniers sont engagés axialement/longitudinalement depuis l'arrière sur des rebords circonférentiels des extrémités arrière des secteurs d'anneau et des éléments intermédiaires de carter, pour les maintenir plaqués radialement les uns contre les autres.

Cette fixation des secteurs d'anneau sur les éléments intermédiaires du carter de la turbine leur permet de suivre les dilatations et contractions thermiques du carter de la turbine, dans lequel on injecte des gaz chauds ou des gaz froids pour contrôler ses dilatations et contractions thermiques afin de conserver un jeu radial aussi faible que possible entre les surfaces internes des secteurs d'anneau et les extrémités des aubes mobiles de la turbine, et ainsi augmenter le rendement de la turbine.

De manière connue, les organes de verrouillage forment conjointement un dispositif de verrouillage annulaire centré sur l'axe de la turbomachine, chaque organe ne formant donc qu'un secteur angulaire de ce dispositif. Chaque organe comprend deux branches longitudinales de serrage s'étendant axialement/longitudinalement vers l'arrière et raccordées à leurs extrémités arrière par une branche de raccord, tandis que leurs extrémités avant sont destinées à plaquer entre celles-ci au moins un secteur d'anneau contre au moins un élément de carter. Ces deux derniers éléments plaqués radialement l'un contre l'autre sont effectivement prévus pour être logés dans l'espace formé entre les deux branches longitudinales, ouvert longitudinalement vers l'avant.

Les organes de verrouillage sont conçus, notamment en ce qui concerne l'élasticité et l'écartement des deux branches longitudinales, pour que le serrage radial appliqué soit performant. Or dans un tel cas, l'extraction de ces organes de verrouillage, nécessitée par exemple lors des opérations de maintenance de la turbine, s'avère extrêmement difficile à réaliser, en raison de l'importante force de serrage radial exercée par les branches longitudinales sur les rebords circonférentiels. De ce fait, l'extraction requiert habituellement l'emploi d'un outillage par l'opérateur, outillage présentant généralement une forme non adaptée, susceptible d'endommager les organes de verrouillage, ainsi que les éléments environnants. Une telle situation se présente par exemple lors de l'utilisation d'un tournevis, que l'opérateur tente de glisser entre l'une des branches longitudinales de l'organe et le rebord circonférentiel en contact de cette branche. En effet, le tournevis est alors utilisé comme un bras de levier, susceptible d'endommager à la fois la branche longitudinale et le rebord circonférentiel concernés, ou encore de blesser l'opérateur.

En conséquence, la conception des organes de verrouillage actuels ne permet pas une extraction rapide et aisée, et génère de plus des risques importants d'endommagement des branches de serrage, lors d'une telle extraction.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un organe de verrouillage pour dispositif de fixation de secteurs d'anneau sur un carter de turbomachine d'aéronef, ledit organe s'étendant selon une direction circonférentielle entre une première extrémité circonférentielle et une seconde extrémité circonférentielle, ledit organe présentant, en coupe selon un plan orthogonal à ladite direction circonférentielle, deux branches de serrage raccordées entre elles à leur extrémité arrière par une branche de raccord s'étendant sensiblement parallèlement à une direction générale d'espacement des deux branches de serrage, les extrémités avant des deux branches de serrage étant destinées à plaquer entre celles-ci au moins un secteur d'anneau contre au moins un élément de carter.

Selon l'invention, ledit organe est pourvu, de part et d'autre d'un plan médian fictif orthogonal à ladite direction circonférentielle, d'un passage permettant la préhension dudit organe, chaque passage étant pratiqué dans ladite branche de raccord, en s'étendant selon une ligne directrice sensiblement parallèle à ladite direction d'espacement.

Ainsi, l'organe selon l'invention prévoit de façon originale des moyens permettant sa préhension, destinés à faciliter son extraction après qu'il ait été mis en place sur les secteurs d'anneau, par exemple à l'aide d'un outil approprié.

En outre, le positionnement particulier des passages au niveau de la branche de raccord, à savoir à distance des extrémités avant des branches de serrage assurant le plaquage des secteurs d'anneau, implique qu'ils peuvent aisément coopérer avec un outil d'extraction sans risquer de détériorer les fonctionnalités de cet organe de verrouillage, en particulier donc en raison de l'absence de contact direct entre l'outil et les extrémités avant précitées. En d'autres termes, le fait d'agripper ces passages avec un outil n'engendre aucune sollicitation mécanique directe sur les extrémités avant des branches de serrage qui ne risquent donc pas d'être endommagées par la pression de l'outil, les sollicitations étant en effet essentiellement concentrées sur la branche de raccord déportée vers l'arrière de la zone sensible.

De préférence, chaque ligne directrice est une ligne droite, par exemple s'étendant sensiblement radialement, donc orthogonalement à ladite direction circonférentielle selon laquelle s'étend l'organe de verrouillage. En d'autres termes, chaque ligne droite passe de préférence par un axe d'une turbine équipée d'une pluralité de ces organes pour assurer le plaquage des secteurs d'anneau contre des éléments de carter. Bien entendu, l'orientation des lignes directrices des passages pourrait être différente de la direction radiale, comme par exemple fixée de manière à ce que les deux lignes directrices soient sensiblement parallèles entre elles.

De préférence, les deux passages sont agencés sur ou à proximité respectivement de ladite première extrémité circonférentielle et de ladite seconde extrémité circonférentielle. Ces extrémités correspondent aux portions de l'organe les moins sollicitées lorsque celui-ci se trouve en condition de serrage des secteurs d'anneau, de sorte que la présence des passages à ces endroits ne crée qu'un affaiblissement mécanique négligeable de l'organe, ne nécessitant aucun surdimensionnement des zones environnantes.

De préférence, pour des facilités de réalisation et de coopération avec un outil d'extraction, chaque passage est sensiblement cylindrique, d'axe correspondant à ladite ligne directrice. A cet égard, on peut indifféremment prévoir chaque passage soit réalisé traversant, ou borgne. Dans le premier cas, l'accès avec l'outil est autorisé de part et d'autre de l'organe, selon la ligne directrice, tandis que dans le second cas, l'accès n'est autorisé que depuis le seul côté duquel débouche le passage borgne.

Selon un mode de réalisation préféré, chaque passage prend la forme d'une rainure s'étendant selon la ligne directrice, à savoir que le fond de cette rainure s'étend sensiblement parallèlement à la direction d'espacement. De préférence, on prévoit que chaque rainure est pratiquée de manière à s'ouvrir dans ladite direction circonférentielle. Alternativement, chaque rainure pourrait être pratiquée de manière à s'ouvrir vers l'arrière dans une direction longitudinale selon laquelle s'étendent sensiblement chacune des deux branches de serrage, sans sortir du cadre de l'invention.

De préférence, en particulier pour le cas des rainures ouvertes dans la direction circonférentielle, chaque rainure présente, en vue prise extérieurement par rapport à l'organe et selon ladite ligne directrice, une forme sensiblement semi-circulaire.

Quel que soit le cas envisagé, chaque rainure forme au moins une surface de butée sur ladite branche de raccord, ladite surface de butée étant sensiblement orientée vers un espace interbranches de l'organe, défini entre lesdites branches de serrage. Cette surface de butée peut donc servir de surface d'appui pour un outil d'extraction, qui peut ensuite être sollicité dans la direction longitudinale vers l'arrière afin de provoquer l'extraction souhaitée. Naturellement, la surface de butée peut présenter différentes formes, par exemple courbe dans le cas préféré de la forme semi-circulaire précitée de la rainure, le but restant cependant toujours de constituer avec cette surface une butée dans la direction longitudinale vers l'arrière, pour un outil sollicité dans cette dernière direction après avoir été introduit dans le passage associé.

Selon un autre mode de réalisation préféré de la présente invention, chaque passage présente, en vue prise extérieurement par rapport à l'organe et selon ladite ligne directrice, une ligne de délimitation fermée. A cet égard, il peut s'agir d'une ligne de délimitation de forme générale oblongue ou en cercle, du type alésage.

De préférence, l'organe de verrouillage forme un secteur angulaire d'un dispositif de verrouillage annulaire, destiné à être centré sur l'axe de la turbine équipé d'un tel dispositif.

L'invention a également pour objet un dispositif de fixation de secteurs d'anneau sur un carter de turbomachine d'aéronef, comprenant des éléments de carter formés avec des premiers rebords circonférentiels arrière sur lesquels sont appliqués des seconds rebords circonférentiels arrière des secteurs d'anneau, le dispositif de fixation comprenant en outre une pluralité d'organes de verrouillage tels que décrits ci-dessus, engagés sur lesdits premiers et seconds rebords circonférentiels pour les maintenir plaqués les uns contre les autres. Dans un tel cas, les premiers et seconds rebords circonférentiels, s'étendant vers l'arrière selon la direction longitudinale, pénètrent donc à travers l'ouverture avant des organes définie entre les branches de serrage, afin d'y être maintenus plaqués radialement les uns contre les autres.

L'invention a également pour objet une turbine de turbomachine d'aéronef comprenant un dispositif de fixation de secteurs d'anneau tel que décrit ci-dessus, et/ou au moins un organe de verrouillage tel que décrit ci-dessus. Il pourrait alternativement s'agir d'un compresseur de turbomachine, sans sortir du cadre de l'invention.

Enfin, l'invention a pour objet une turbomachine d'aéronef comprenant une turbine tel que décrite ci-dessus, et/ou un dispositif de fixation de secteurs d'anneau tel que décrit ci-dessus, et/ou au moins un organe de verrouillage tel que décrit ci-dessus, cette turbomachine pouvant indifféremment être un turboréacteur ou un turbopropulseur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en coupe longitudinale d'un dispositif de fixation de secteurs d'anneau sur un carter de turbine de turbomachine d'aéronef, selon un mode de réalisation préféré de la présente invention, cette vue correspondant également à une vue prise en coupe selon le plan P1 de la figure 3, orthogonal à la direction circonférentielle et passant par l'un des passages permettant la préhension de l'organe ;
- la figure 2 représente une vue partielle et agrandie similaire à celle montrée sur la figure 1, cette vue correspondant également à une vue prise en coupe selon le plan P2 de la figure 3, constituant un plan médian fictif orthogonal à la direction circonférentielle ;
- la figure 3 représente une vue en perspective d'un organe de verrouillage appartenant au dispositif de fixation de secteurs d'anneau montré sur les figures 1 et 2 ;
- la figure 4 représente, de façon agrandie, l'organe de verrouillage montré sur la figure 1 ;
- la figure 5 représente l'organe montré sur les figures 3 et 4, la partie de gauche correspondant à une vue prise selon la ligne directrice du passage prévu dans cette partie de l'organe, et la partie de droite correspondant à une vue prise selon la ligne directrice de l'autre passage prévu dans cette partie de l'organe ;
- les figures 6a à 6c schématisent un procédé d'extraction de l'organe de verrouillage montré sur les figures 1 à 5 ;
- la figure 7 schématise un autre procédé visant à réaliser l'extraction simultanée de deux organes de verrouillage du type de celui montré sur les figures 1 à 5 ; et
- les figures 8 et 9 représentent des vues similaires à celle montrée sur la figure 3, l'organe de verrouillage se présentant respectivement sous la forme de deux alternatives de réalisation.

### EXPOSÉ DÉTAILLÉ DE MODES DE RÉALISATION PRÉFÉRÉS

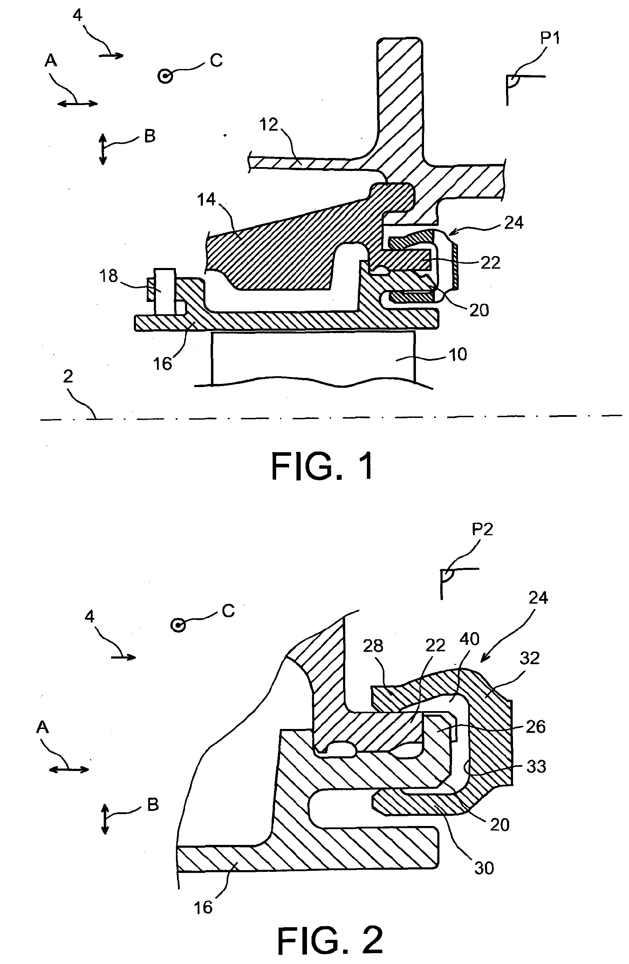

En référence conjointement aux figures 1 et 2, on peut apercevoir un dispositif de fixation de secteurs d'anneau sur un carter de turbine de turbomachine d'aéronef, selon un mode de réalisation préféré de la présente invention.

Sur les figures, la direction A correspond à la direction longitudinale ou direction axiale, parallèle à l'axe longitudinal 2 de la turbine et de la turbomachine. La direction B correspond quant à elle à la direction radiale de la turbine, et la direction C à la direction circonférentielle. De plus, la flèche 4 schématise la direction principale d'écoulement des gaz au sein de la turbomachine, parallèle à la direction A, les termes « avant », « amont », « arrière », « aval » utilisés dans la suite de la description étant à considérer par rapport à une direction d'avancement de l'aéronef sous l'action de la poussée de la turbomachine, cette direction d'avancement étant contraire au sens de la flèche 4.

Sur la figure 1, la référence 10 désigne les aubes mobiles d'un étage de turbine haute-pression d'un turboréacteur, qui tournent dans un carter de turbine 12 à l'intérieur duquel sont fixés des éléments de carter 14, dénommés entretoises ou éléments intermédiaires de carter. Les éléments 14 portent des secteurs d'anneau 16 disposés circonférentiellement autour de l'axe de rotation 2 de la turbine, selon la direction C, les surfaces internes de ces secteurs d'anneau formant une surface cylindrique continue qui délimite extérieurement une veine de passage de gaz dans la turbine.

Les secteurs d'anneau 16 ont une étendue angulaire autour de l'axe de la turbine, selon la direction C, de 10 à 20° environ, et sont par exemple au nombre d'une trentaine.

Chaque secteur d'anneau 16 comprend à son extrémité amont ou extrémité avant un rebord circonférentiel 18 en portion de cylindre, par lequel il est accroché ou fixé sur une entretoise 14, et comprend également à son extrémité arrière ou extrémité aval un rebord circonférentiel 20 en portion de cylindre qui est appliqué sur un rebord circonférentiel 22 correspondant en portion de cylindre de l'entretoise 14. Dans la suite, le rebord circonférentiel 22 est dit premier rebord circonférentiel, et le rebord circonférentiel 20 est dit second rebord circonférentiel.

Les deux rebords circonférentiels 20 et 22 s'étendant dans la direction A sont maintenus plaqués l'un contre l'autre selon la direction B dans laquelle ils sont superposés, par un organe de verrouillage 24 en forme de C ou de U couché qui est engagé par l'arrière sur les rebords circonférentiels 20 et 22 et qui les maintient serrés radialement l'un sur l'autre.

Conjointement, les organes de verrouillage 24 forment un dispositif de verrouillage annulaire centré sur l'axe 2, faisant partie intégrante du dispositif de fixation des secteurs d'anneau. Ainsi, chaque organe 24 prend la forme d'un secteur angulaire du dispositif de verrouillage annulaire, s'étendant par exemple sur 10 à 20° environ, dans la direction C. Pour former un anneau complet, de préférence continu, ils sont prévus adjacents dans la direction C, par exemple au nombre d'une trentaine centrés sur l'axe 2.

A cet égard, il est noté que si l'étendue angulaire des organes 24 autour de l'axe 2 de la turbine peut être du même ordre que celle des secteurs d'anneau 16, cette étendue peut alternativement être supérieure, sans sortir du cadre de l'invention. Ainsi, selon les cas, il est possible de prévoir un organe de verrouillage 24 par secteur d'anneau 16, ou bien un organe de verrouillage 24 pour plusieurs secteurs d'anneau 16.

Les secteurs d'anneau 16, les entretoises 14 et les organes de verrouillage 24 sont métalliques, en composite à matrice métallique (CMC), ou dans d'autres matériaux, et les organes de verrouillage 24 sont montés élastiquement de façon serrée sur les rebords circonférentiels 20 et 22, pour les plaquer l'un contre l'autre avec une certaine précontrainte dans la direction radiale B, tel que cela sera détaillé ci-après.

Comme cela est représenté schématiquement sur la figure 2, le second rebord circonférentiel 20 du secteur d'anneau 16 se termine à son extrémité arrière par des dents radiales 26 orientées vers l'extérieur, et engagées dans des encoches correspondantes du premier rebord circonférentiel 22 de l'entretoise 14, de façon à immobiliser chaque secteur d'anneau 16 en rotation autour de l'axe 2 de la turbine sur une entretoise 14.

De façon générale, chaque organe de verrouillage 24 comprend, en coupe selon un plan orthogonal à la direction C tel que cela est le cas sur la figure 2, deux branches de serrage 28 et 30, dites branches longitudinales radialement externe et radialement interne, respectivement, qui sont reliées rigidement entre elles à leur extrémité arrière par une branche de raccord 32, et dont les extrémités avant sont appliquées sur la face cylindrique externe du premier rebord circonférentiel 22 de l'entretoise 14 et sur la face cylindrique interne du second rebord circonférentiel 20 du secteur d'anneau 16, respectivement. Globalement, les branches circonférentielles 28, 30 s'étendent longitudinalement dans la direction A, et sont espacées l'une de l'autre selon une direction générale d'espacement, correspondant ici de préférence à la direction radiale B. La branche circonférentielle 32 s'étend quant à elle sensiblement selon cette direction d'espacement, à savoir dans la direction radiale B, pour relier les deux extrémités arrière des branches 28, 30. Ces deux dernières branches forment donc conjointement un espace interbranches 40 ouvert vers l'avant dans la direction A pour le passage des rebords 20, 22, et fermé vers l'arrière dans cette même direction A par la branche de raccord 32.

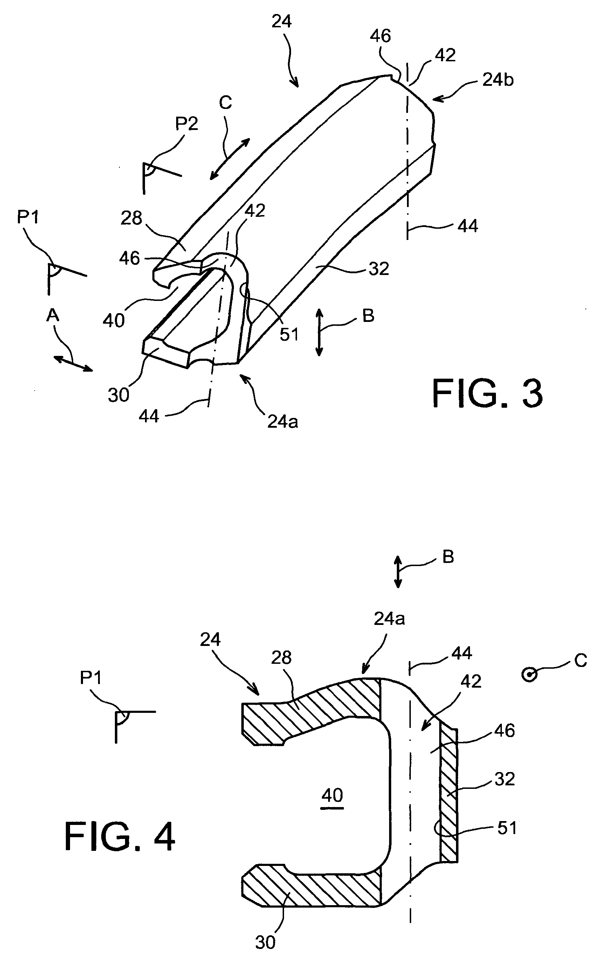

Si la figure 2 montre que l'organe 24 prend, en coupe orthogonale à la direction C, la forme d'un C ou d'un U couché, il doit être compris que l'organe s'étend sous cette forme sur un secteur angulaire donné suivant la direction C, entre une première extrémité circonférentielle 24a et une seconde extrémité circonférentielle 24b, comme montré sur la figure 3.

Plus spécifiquement en référence à cette figure, l'une des particularités de la présente invention réside dans l'implantation, de préférence aux extrémités circonférentielles 24a, 24b ou à proximité de celles-ci, de moyens permettant la préhension de l'organe de verrouillage 24, globalement agencés vers l'arrière de ce dernier, en particulier sur la branche de raccord 32.

Ces moyens prennent la forme de deux passages, chacun en forme de rainure, respectivement prévues de part et d'autre du plan P2 constituant un plan médian fictif orthogonal à la direction C. Plus précisément et comme mentionné ci-dessus, les deux rainures 42 sont respectivement agencées aux extrémités 24a, 24b, et présentent la particularité de s'étendre chacune selon une ligne droite directrice 44, agencée de préférence radialement, parallèlement à la branche 32. A titre indicatif, les deux lignes droites radiales 44 étant espacées circonférentiellement l'une de l'autre, elles ne sont de ce fait pas réellement parallèles entre elles, même si une telle configuration reste envisageable.

En référence conjointement aux figures 3 à 5, on peut s'apercevoir que chaque rainure 42 s'étend de façon cylindrique selon sa ligne droite directrice 44, en étant au moins en partie pratiquée sur la branche de raccord 32 qu'elle traverse de préférence entièrement dans la direction B. Dans le mode de réalisation préféré représenté, chaque rainure 42 est pratiquée non seulement sur la branche 32, mais également à travers une partie arrière de chacune des deux branches de serrage 28, 30, tout en restant à distance de leur extrémité avant de plaquage. Néanmoins, chaque rainure 42 pourrait être pratiquée seulement sur la branche 32, sans sortir du cadre de l'invention.

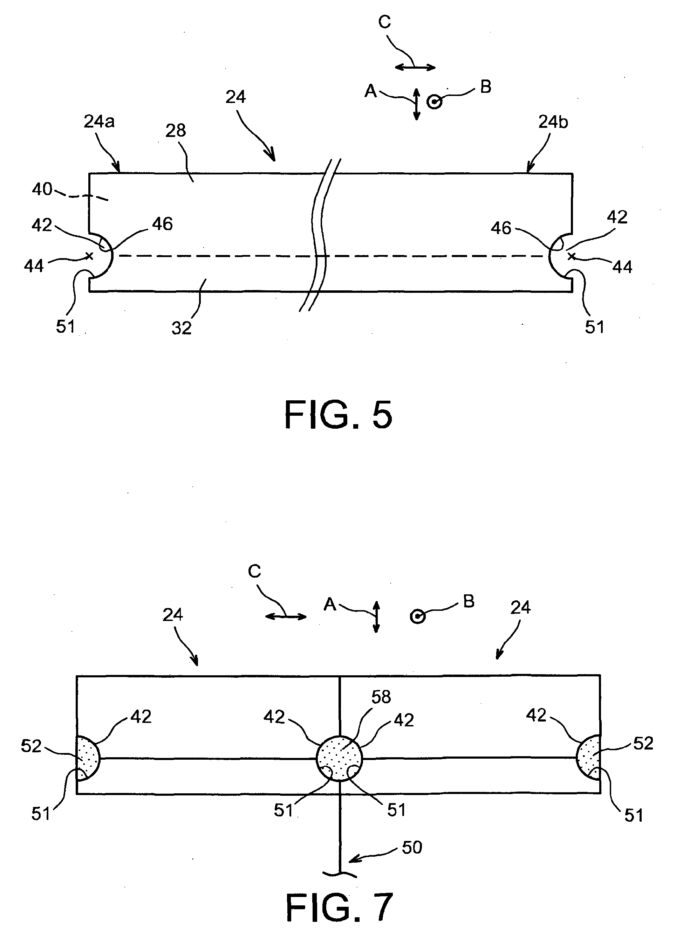

Chaque rainure 42 s'ouvre dans la direction circonférentielle C, à savoir que son fond 46 est orienté dans cette même direction, vers l'extérieur de l'organe. De préférence, en vue prise extérieurement par rapport à l'organe et selon la ligne directrice 44, telle que celle de la figure 5, la rainure 42 prend une forme sensiblement semi-circulaire, avec le diamètre correspondant à l'ouverture de la rainure, et la partie courbe opposée au diamètre correspondant au fond 46 de celle-ci. De plus, la partie courbe adjacente au diamètre et située du côté de la branche 32, référencée 51, forme une surface de butée sur cette branche de raccord, la surface de butée 51 étant donc sensiblement parallèle à la direction radiale B, et sensiblement orientée vers l'espace interbranches 40. Cette surface de butée 51 peut alors servir de surface d'appui pour un outil d'extraction de l'organe 24, qui peut ensuite être sollicité dans la direction longitudinale vers l'arrière afin de provoquer l'extraction souhaitée. En effet, les rainures 42 permettant la préhension de l'organe 24, sont destinées à faciliter son extraction après qu'il ait été mis en place sur les secteurs d'anneau 16. Le positionnement particulier de ces moyens, déportés vers l'arrière sur l'organe 32, implique qu'ils peuvent aisément coopérer avec un outil d'extraction sans risquer de détériorer les fonctionnalités de cet organe de verrouillage 24, en particulier donc en raison de l'absence de contact direct entre l'outil et l'extrémité avant des branches 28, 30. Par conséquent, comme cela sera détaillé ci-après, le fait d'agripper ces rainures 42 avec un outil pénétrant dans celles-ci et venant en appui contre les surfaces de butée 51 n'engendre aucune sollicitation mécanique directe sur les branches longitudinales de serrage 28, 30, qui ne risquent donc pas d'être endommagées par la pression de l'outil.

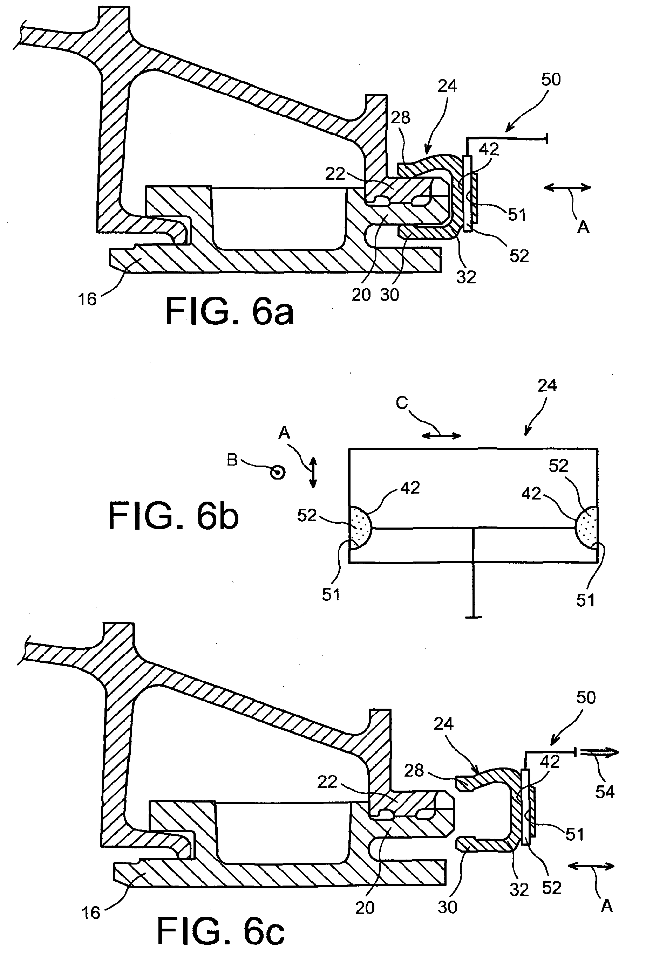

En référence à présent aux figures 6a et 6c, il est schématisé un procédé visant à l'extraction d'un organe de verrouillage 24 initialement situé dans sa position de serrage des secteurs d'anneau 16, montrée sur les figures précédentes. Pour ce faire, un outil 50 de forme appropriée est employé, cet outil présentant globalement une tête en forme de fourche comportant deux bras respectivement pourvus de deux extrémités 52, par exemple en forme d'ergot cylindrique de forme sensiblement complémentaire de celles des rainures 42 dans lesquelles ils sont respectivement destinés à pénétrer, comme cela est le mieux visible sur la figure 6b, vue selon la direction radiale B.

En effet, les deux extrémités 52 sont insérées respectivement dans les deux rainures 42, par exemple en déplaçant l'outil dans la direction radiale, avec l'axe de chaque ergot sensiblement confondu avec la ligne directrice de sa rainure associée. Pour ce faire, l'outil 50 peut donc être présenté au-dessus de l'organe 24 dans là direction B, ou en dessous de celui-ci dans cette même direction, en raison du caractère traversant des rainures.

Ensuite, l'outil 50 est sollicité dans la direction longitudinale A vers l'arrière, comme le montre la figure 6c, manuellement ou automatiquement, ce qui a pour effet, si tel n'est pas déjà le cas, de mettre en contact les ergots 52 avec leurs surfaces de butée respectives 51. La poursuite de cette action sur l'outil 50, schématisée par la flèche 54 sur la figure 6c, a pour conséquence de déplacer progressivement l'organe 24 dans la direction A par glissement vers l'arrière des branches 28, 30 sur les rebords 20, 22, jusqu'à l'extraction totale de l'organe 24 libérant les secteurs d'anneau 16 associés.

La figure 7 montre un autre procédé d'extraction visant à réaliser, simultanément, l'extraction de deux organes 24 directement consécutifs dans la direction C, à l'aide d'un unique outil 50. Pour ce faire, cet outil 50, montré de manière schématisée sur la figure 7, présente également une tête en forme de fourche comportant deux bras respectivement pourvus de deux extrémités 52, par exemple en forme d'ergot cylindrique de forme sensiblement complémentaire de celles des rainures 42 dans lesquelles ils sont respectivement destinés à pénétrer, à savoir de préférence de section semi-circulaire. De plus, au niveau de la jonction entre les deux bras, l'outil comporte un troisième ergot 58 aligné en vue de dessus avec les deux autres ergots 52, et de forme complémentaire de celle de l'espace formé par les deux rainures 42 en regard, dans lesquelles il est destiné à pénétrer. Cette forme est alors de préférence de section circulaire.

Ainsi, l'ergot central 58 pénètre simultanément dans les deux rainures 42 en regard, appartenant respectivement aux deux organes 24, ces deux rainures en regard formant en effet conjointement un logement de section sensiblement circulaire de forme complémentaire de celle de l'ergot 58. Parallèlement, les deux ergots d'extrémité 52 sont insérés respectivement dans les deux autres rainures 42 des deux organes 24, à savoir celles situées aux extrémités circonférentielles du doublet d'organes concerné, toujours par exemple en déplaçant l'outil dans la direction radiale. Pour ce faire, l'outil 50 peut donc être présenté au-dessus des deux organes 24 dans la direction B, ou en dessous de celui-ci dans cette même direction.

Ensuite, pour assurer l'extraction des deux organes, l'outil 50 est sollicité dans la direction longitudinale A vers l'arrière, comme le montre la flèche de la figure 7.

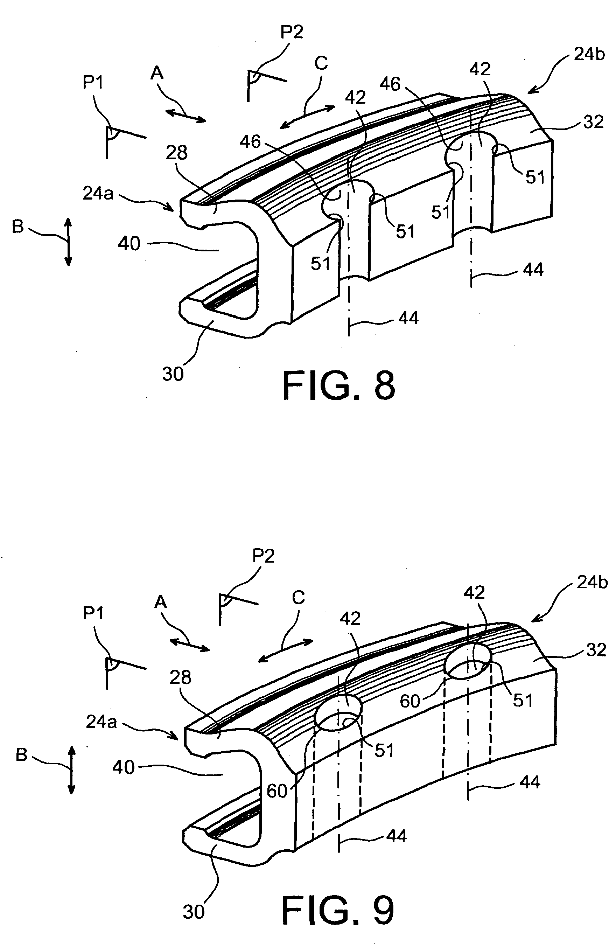

D'autres conceptions peuvent être prévues pour l'organe de verrouillage selon l'invention, comme celles montrées sur les figures 8 et 9, sur chacune desquelles les passages formant moyens de préhension sont sensiblement recentrés, à savoir écartés des extrémités circonférentielles 24a, 24b, tout en restant agencés de part et d'autre du plan médian fictif P2.

Pour ce qui concerne la figure 8, les deux passages prennent également chacun la forme d'une rainure 42 s'étendant selon une ligne droite directrice 44 sensiblement radiale, mais en s'ouvrant longitudinalement vers l'arrière, et non plus circonférentiellement comme pour le mode de réalisation précédent. De préférence, en vue (non représentée) prise extérieurement par rapport à l'organe et selon la ligne directrice 44, chaque rainure 42 prend une forme sensiblement circulaire non fermée, mais s'étendant sur un secteur angulaire supérieur à 180°, afin de former deux surfaces de butée 51 de part et d'autre de l'ouverture de la rainure. Chacune des deux surfaces de butée courbe 51 est donc sensiblement parallèle à la direction radiale B, et sensiblement orientée vers l'espace interbranches 40. Ici encore, ces surfaces de butée 51 peuvent alors servir de surface d'appui pour un outil d'extraction de l'organe 24, qui peut ensuite être sollicité dans la direction longitudinale vers l'arrière afin de provoquer l'extraction souhaitée.

Dans ce mode de réalisation, le fond de la rainure 46, orienté vers l'arrière dans la direction longitudinale A, peut indifféremment être prévu sur la branche de raccord 32 tout le long de celle-ci dans la direction B, ou encore sur une partie arrière des branches de serrage 28, 30, comme montré sur la figure 8.

Pour ce qui concerne la figure 9, le mode de réalisation qui y est représenté diffère des deux précédents par le fait que les deux passages permettant la préhension ne prennent plus la forme de rainures, mais s'apparentent à des alésages. En effet, chaque passage 42 présente, en vue (non représentée) prise extérieurement par rapport à l'organe et selon la ligne directrice 44, une ligne de délimitation fermée 60, par exemple de forme circulaire ou oblongue. Les passages pratiqués sont alors ici aussi pratiqués uniquement sur la branche de raccord 32, ou bien à cheval sur cette branche 32 et les deux branches de serrage 28, 30, comme cela a été représenté sur la figure 9.

La partie arrière de chaque passage 42, qui s'étend de préférence tout le long de la branche de raccord dans la direction B, forme également une surface de butée 51 sensiblement parallèle à cette direction radiale B, et sensiblement orientée vers l'espace interbranches 40. Ici encore, ces surfaces de butée 51 peuvent alors servir de surface d'appui pour un outil d'extraction de l'organe 24, qui peut ensuite être sollicité dans la direction longitudinale vers l'arrière afin de provoquer l'extraction souhaitée.

Bien entendu, diverses modifications peuvent être apportées par l'homme du métier à l'invention qui vient d'être décrite, uniquement à titre d'exemples non limitatifs.

## Revendications

1. Organe de verrouillage (24) pour dispositif de fixation de secteurs d'anneau sur un carter de turbomachine d'aéronef, ledit organe s'étendant selon une direction circonférentielle (C) entre une première extrémité circonférentielle (24a) et une seconde extrémité circonférentielle (24b), ledit organe présentant, en coupe selon un plan orthogonal à ladite direction circonférentielle, deux branches de serrage (28, 30) raccordées entre elles à leur extrémité arrière par une branche de raccord (32) s'étendant sensiblement parallèlement à une direction générale d'espacement des deux branches de serrage, les extrémités avant des deux branches de serrage étant destinées à plaquer entre celles-ci au moins un secteur d'anneau contre au moins un élément de carter,
**caractérisé en ce que** ledit organe est pourvu, de part et d'autre d'un plan médian fictif (P2) orthogonal à ladite direction circonférentielle, d'un passage (42) permettant la préhension dudit organe, chaque passage étant pratiqué dans ladite branche de raccord (32), en s'étendant selon une ligne directrice (44) sensiblement parallèle à ladite direction d'espacement.

2. Organe de verrouillage selon la revendication 1, **caractérisé en ce que** chaque ligne directrice (44) est une ligne droite.

3. Organe de verrouillage selon la revendication 1 ou la revendication 2, **caractérisé en ce que** les deux passages (42) sont agencés sur ou à proximité respectivement de ladite première extrémité circonférentielle (24a) et de ladite seconde extrémité circonférentielle (24b).

4. Organe de verrouillage selon l'une quelconque des revendications précédentes, **caractérisé en ce que** chaque passage (42) est sensiblement cylindrique, d'axe correspondant à ladite ligne directrice (44).

5. Organe de verrouillage selon l'une quelconque des revendications précédentes, **caractérisé en ce que** chaque passage (42) est réalisé traversant, ou borgne.

6. Organe de verrouillage selon l'une quelconque des revendications précédentes, **caractérisé en ce que** chaque ligne directrice (44) s'étend sensiblement radialement.

7. Organe de verrouillage selon l'une quelconque des revendications précédentes, **caractérisé en ce que** chaque passage (42) prend la forme d'une rainure s'étendant selon la ligne directrice.

8. Organe de verrouillage selon la revendication 7, **caractérisé en ce que** chaque rainure (42) est pratiquée de manière à s'ouvrir dans ladite direction circonférentielle (C).

9. Organe de verrouillage selon la revendication 8, **caractérisé en ce que** chaque rainure (42) présente, en vue prise extérieurement par rapport à l'organe et selon ladite ligne directrice (44), une forme sensiblement semi-circulaire.

10. Organe de verrouillage selon l'une quelconque des revendications 7 à 9, **caractérisé en ce que** chaque rainure (42) forme au moins une surface de butée (51) sur ladite branche de raccord (32), ladite surface de butée étant sensiblement orientée vers un espace interbranches (40) de l'organe, défini entre lesdites branches de serrage (28, 30).

11. Organe de verrouillage selon l'une quelconque des revendications 1 à 6, **caractérisé en ce que** chaque passage (42) présente, en vue prise extérieurement par rapport à l'organe et selon ladite ligne directrice (44), une ligne de délimitation fermée (60).

12. Organe de verrouillage selon la revendication 11, **caractérisé en ce que** chaque ligne de délimitation (60) présente une forme générale oblongue ou en cercle.

13. Organe de verrouillage selon l'une quelconque des revendications précédentes, **caractérisé en ce qu'**il forme un secteur angulaire d'un dispositif de verrouillage annulaire.

14. Dispositif de fixation de secteurs d'anneau sur un carter de turbomachine d'aéronef, comprenant des éléments de carter (14) formés avec des premiers rebords circonférentiels arrière (22) sur lesquels sont appliqués des seconds rebords circonférentiels arrière (20) des secteurs d'anneau (16), **caractérisé en ce que** le dispositif de fixation comprend en outre une pluralité d'organes de verrouillage (24) selon l'une quelconque des revendications précédentes, engagés sur lesdits premiers et seconds rebords circonférentiels (22, 20) pour les maintenir plaqués les uns contre les autres.

15. Turbine de turbomachine d'aéronef comprenant un dispositif de fixation de secteurs d'anneau selon la revendication 14, et/ou au moins un organe de verrouillage selon l'une quelconque des revendications 1 à 13.

16. Turbomachine d'aéronef comprenant une turbine selon la revendication 15, et/ou un dispositif de fixation de secteurs d'anneau selon la revendication 14, et/ou au moins un organe de verrouillage selon l'une quelconque des revendications 1 à 13.

17. Turbomachine selon la revendication 16, **caractérisée en ce qu'**elle est un turboréacteur ou un turbopropulseur.

## Patentansprüche

1. Verriegelungsorgan (24) für eine Vorrichtung zur Befestigung von Ringsektoren an einem Gehäuse einer Luftfahrzeugturbomaschine, wobei sich das Organ in einer Umfangsrichtung (C) zwischen einem ersten Umfangsende (24a) und einem zweiten Umfangsende (24b) erstreckt, wobei das Organ, im Schnitt entlang einer zu der Umfangsrichtung orthogonalen Ebene, zwei Klemmschenkel (28, 30) umfasst, die an ihrem hinteren Ende durch einen Verbindungsschenkel (32), welcher sich im Wesentlichen parallel zu einer Abstandshauptrichtung der beiden Klemmschenkel erstreckt, untereinander verbunden sind, wobei die vorderen Enden der beiden Klemmschenkel dazu bestimmt sind, zwischen diesen wenigstens einen Ringsektor gegen wenigstens ein Gehäuseelement zu drücken,
**dadurch gekennzeichnet, dass** das Organ auf beiden Seiten einer fiktiven Mittelebene (P2), die zu der Umfangsrichtung orthogonal ist, mit einem Durchgang (42), der das Greifen des Organs ermöglicht, versehen ist, wobei jeder Durchgang in dem Verbindungsschenkel (32) ausgebildet ist und sich dabei entlang einer zu der Abstandsrichtung im Wesentlichen parallelen Leitlinie (44) erstreckt.

2. Verriegelungsorgan nach Anspruch 1, **dadurch gekennzeichnet, dass** jede Leitlinie (44) eine gerade Linie ist.

3. Verriegelungsorgan nach Anspruch 1 oder Anspruch 2, **dadurch gekennzeichnet, dass** die beiden Durchgänge (42) an dem oder in der Nähe des ersten Umfangsendes (24a) bzw. des zweiten Umfangsendes (24b) angeordnet sind.

4. Verriegelungsorgan nach einem der vorhergehenden Ansprüche, **dadurch gekennzeichnet, dass** jeder Durchgang (42) im Wesentlichen zylindrisch ist, mit einer Achse, die der Leitlinie (44) entspricht.

5. Verriegelungsorgan nach einem der vorhergehenden Ansprüche, **dadurch gekennzeichnet, dass** jeder Durchgang (42) durchgehend oder blind ausgebildet ist.

6. Verriegelungsorgan nach einem der vorhergehenden Ansprüche, **dadurch gekennzeichnet, dass** jede Leitlinie (44) im Wesentlichen radial verläuft.

7. Verriegelungsorgan nach einem der vorhergehenden Ansprüche, **dadurch gekennzeichnet, dass** jeder Durchgang (42) die Form einer sich entlang der Leitlinie erstreckenden Nut annimmt.

8. Verriegelungsorgan nach Anspruch 7, **dadurch gekennzeichnet, dass** jede Nut (42) derart ausgebildet ist, dass sie sich in der Umfangsrichtung (C) öffnet.

9. Verriegelungsorgan nach Anspruch 8, **dadurch gekennzeichnet, dass** jede Nut (42), in einer in Bezug auf das Organ äußeren Ansicht und entlang der Leitlinie (44), im Wesentlichen halbkreisförmig ist.

10. Verriegelungsorgan nach einem der Ansprüche 7 bis 9, **dadurch gekennzeichnet, dass** jede Nut (42) wenigstens eine Anschlagfläche (51) an dem Verbindungsschenkel (32) bildet, wobei die Anschlagfläche im Wesentlichen zu einem Zwischenschenkelraum (40) des Organs, der zwischen den Klemmschenkeln (28, 30) definiert ist, gerichtet ist.

11. Verriegelungsorgan nach einem der Ansprüche 1 bis 6, **dadurch gekennzeichnet, dass** jeder Durchgang (42), in einer in Bezug auf das Organ äußeren Ansicht und entlang der Leitlinie (44), eine geschlossene Begrenzungslinie (60) aufweist.

12. Verriegelungsorgan nach Anspruch 11, **dadurch gekennzeichnet, dass** jede Begrenzungslinie (60) eine insgesamt längliche Form oder Kreisform aufweist.

13. Verriegelungsorgan nach einem der vorhergehenden Ansprüche, **dadurch gekennzeichnet, dass** es einen Winkelsektor einer ringförmigen Verriegelungsvorrichtung bildet.

14. Vorrichtung zur Befestigung von Ringsektoren an einem Gehäuse einer Luftfahrzeugturbomaschine, umfassend Gehäuseelemente (14), die mit ersten hinteren Umfangsrändern (22) gebildet sind, an die zweite hintere Umfangsränder (20) der Ringsektoren (16) angelegt sind, **dadurch gekennzeichnet, dass** die Befestigungsvorrichtung ferner eine Vielzahl von Verriegelungsorganen (24) nach einem der vorhergehenden Ansprüche umfasst, die auf die ersten und zweiten Umfangsränder (22, 20) gesteckt sind, um sie gegeneinander gedrückt zu halten.

15. Turbine einer Luftfahrzeugturbomaschine, die eine Vorrichtung zur Befestigung von Ringsektoren nach Anspruch 14 und/oder wenigstens ein Verriegelungsorgan nach einem der Ansprüche 1 bis 13 umfasst.

16. Luftfahrzeugturbomaschine, die eine Turbine nach Anspruch 15 und/oder eine Vorrichtung zur Befestigung von Ringsektoren nach Anspruch 14 und/oder wenigstens ein Verriegelungsorgan nach einem der Ansprüche 1 bis 13 umfasst.

17. Turbomaschine nach Anspruch 16, **dadurch gekennzeichnet, dass** sie ein Turbostrahltriebwerk oder ein Turboprop-Triebwerk ist.

## Claims

1. Locking unit (24) for a device designed to attach ring sectors onto an aircraft turbomachine casing, said unit extending along a circumferential direction (C) between a first circumferential end (24a) and a second circumferential end (24b), the cross section of said unit in a plane orthogonal to said circumferential direction containing two clamping arms (28, 30) connected to each other at their aft ends by a connecting arm (32) extending approximately parallel to the general direction between the two clamping arms, the forward ends of the two clamping arms being designed to squeeze at least one ring sector into contact with at least one casing element, between them,
**characterised in that** said unit is provided with a passage (42) enabling gripping of said unit on each side of a fictitious median plane (P2) orthogonal to said circumferential direction, each passage being formed in said connecting arm (32), extending along a direction line (44) approximately parallel to said direction between the arms.

2. Locking unit according to claim 1, **characterised in that** each direction line (44) is a straight line.

3. Locking unit according to claim 1 or claim 2, **characterised in that** the two passages (42) are arranged on or close to said first circumferential end (24a) and said second circumferential end (24b).

4. Locking unit according to any one of the previous claims, **characterised in that** each passage (42) is approximately cylindrical with its axis corresponding to said direction line (44).

5. Locking unit according to any one of the previous claims, **characterised in that** each passage (42) made as a through passage or a blind passage.

6. Locking unit according to any one of the previous claims, **characterised in that** each direction line (44) extends approximately radially.

7. Locking unit according to any one of the previous claims, **characterised in that** each passage (42) is in the form of a groove extending along the direction line.

8. Locking unit according to claim 7, **characterised in that** each groove (42) is made so as to open up in the circumferential direction (C).

9. Locking unit according to claim 8, **characterised in that** each groove (42) is approximately semi-circular in shape when viewed from outside the unit and along said direction line (44).

10. Locking unit according to any one of claims 7 to 9, **characterised in that** each groove (42) forms at least one stop surface (51) on said connecting arm (32), said stop surface being oriented approximately towards a space between the arms (40) of the unit, defined between said clamping arms (28, 30).

11. Locking unit according to any one of claims 1 to 6, **characterised in that** each passage (42) has a closed delimitation line (60) in a view taken from outside the unit along said direction line (44).

12. Locking unit according to claim 11, **characterised in that** each delimitation line (60) is generally an oblong or circular line.

13. Locking unit according to any one of the previous claims, **characterised in that** it forms an angular sector of an annular locking device.

14. Device for fixing ring sectors on an aircraft turbomachine casing comprising casing elements (14) formed with first aft circumferential rims (22) on which second aft circumferential rims (20) of the ring sectors (16) are applied, **characterised in that** the attachment device also comprises a plurality of locking units (24) according to any one of the previous claims, engaged on said first and second circumferential rims (22, 20) to hold them in contact with each other.

15. Turbine in an aircraft turbomachine comprising a ring sectors attachment device according to claim 14, and/or at least one locking unit according to any one of claims 1 to 13.

16. Aircraft turbomachine comprising a turbine according to claim 15 and/or a ring sectors attachment device according to claim 14, and/or at least one locking unit according to any one of claims 1 to 13.

17. Turbomachine according to claim 16, **characterised in that** it is a turbojet or a turboprop.
